# EUROPÄISCHE PATENTSCHRIFT

(11) **EP 3 150 515 B1**
(45) Veröffentlichungstag und Bekanntmachung des Hinweises auf die Patenterteilung: **26.06.2019**
(21) Anmeldenummer: 16191254.8
(22) Anmeldetag: 29.09.2016
(51) Int. Cl.: B65G 15/52, A01D 17/10

(54) **STABBAND FÜR STABFÖRDERER LANDWIRTSCHAFTLICHER MASCHINEN**
ROD BELT FOR ROD CONVEYORS OF AGRICULTURAL MACHINES
TRANSPORTEUR À BARREAUX POUR CONVOYEUR À BANDE À BARREAUX DE MACHINES AGRICOLES

(30) Priorität: 01.10.2015 DE 102015116657
(43) Veröffentlichungstag der Anmeldung: 05.04.2017
(73) Patentinhaber: EA BROEKEMA BV Transportbandenfabriek, 9641 KV Veendam (NL)
(72) Erfinder: Oord, Johan, NL-9717 KV Groningen (NL)
(74) Vertreter: Bremer, Ulrich

(56) Entgegenhaltungen:
- WO-A1-2013/174370
- BE-A2- 902 370
- DE-A1- 4 443 163
- NL-C- 2 012 826
- US-A- 4 653 632

## Beschreibung

Die vorliegende Erfindung betrifft ein Stabband für Stabbandförderer landwirtschaftlicher Maschinen gemäß dem Oberbegriff des Anspruchs 1.

Stabbänder dieser Art gehören seit langem zum Stand der Technik, wie beispielhaft aus der DE 18 34 273 U, der DE 295 17 673 U1, der DE 296 08 628 U1 und der DE 195 20 927 A1 hervorgeht. Bei diesen Stabbändern entspricht die Länge der Befestigungsbereiche der Stäbe im Wesentlichen der Breite der Gurte, wobei die Befestigungsbereiche bei montierten Stäben nicht oder nur unwesentlich über die Ränder der Gurte hervorstehen. Die Befestigung der Stäbe an den Gurten erfolgt durch Niete oder ähnliche Befestigungsmittel. Dazu sind für die Befestigungsmittel in den Befestigungsbereichen der Stäbe entsprechende Löcher vorgesehen, die mit Löchern in den Gurten fluchten.

Die US 705 528 A offenbart einen Stabbandförderer, bei dem die Stäbe nicht direkt mit den Gurten verbunden, sondern an Clipsen befestigt sind, die eine oder zwei dünne Laschen aufweisen, die ihrerseits unter Zwischenfügung von Schutzstreifen aus flexiblem Material mit den Gurten vernietet sind. Die Schutzstreifen, die breiter sind als die Laschen, sollen verhindern, dass das Metall der Laschen beim Passieren von Umlenkrollen die Gurte beschädigt. Die Clipse weisen weiterhin einen Befestigungsbereich für die Stäbe auf, der sich an die Laschen anschließt und über den Innenrand der Gurte hinausragt.

Es ist bekannt, die Stabbänder zusätzlich zu den Stäben mit weiteren Funktionselementen zu versehen. So werden in der EP 1 977 984 A1 seitliche Begrenzungsfinger beschrieben, die ein Herabfallen von Fördergut vom Stabbandförderer verhindern sollen. Diese Begrenzungsfinger werden direkt mit den Gurten verbunden. Dazu weisen sie Stützlaschen auf, die von oben auf die Gurte aufgelegt und mit diesen vernietet werden. Dazu ist es erforderlich, dass die Gurte mit weiteren Befestigungslöchern versehen werden. Das ist insofern nachteilig, als dass die zusätzlichen Befestigungslöcher eine Schwächung der Gurte darstellen.

Zur Vermeidung dieses Nachteils ist es bekannt, die ohnehin erforderlichen Befestigungsstellen der Stäbe zur Befestigung der weiteren Funktionselemente zu nutzen. Dadurch können zusätzliche Befestigungslöcher in den Gurten vermieden werden. Allerdings kann diese Befestigungsart nur dann zur Anwendung kommen, wenn für die Stäbe und die zusätzlichen Funktionselemente annähernd gleiche Befestigungskräfte erforderlich sind. Stark differente Befestigungskräfte würden dazu führen, dass eines der Elemente zu fest oder zu lose an den Gurten befestigt wäre. Dies ist auch besonders nachteilig, wenn im Rücklauf des Bandes die Riemenaußenseite über Tragrollen laufen muss.

In der DE 44 43 163 A1 ist ein Stabband gemäß dem Oberbegriff des Anspruchs 1 für Stabbandförderer landwirtschaftlicher Maschinen beschrieben. Es weist quer zur Laufrichtung und parallel zueinander angeordnete Stäbe auf, die mit abgeflachten und gelochten Befestigungsbereichen ausgestattet sind. Mit diesen Bereichen liegen sie auf parallel zueinander umlaufenden zugfesten elastischen und endlosen Gurten auf, wobei sie durch Niete oder ähnliche Befestigungsmittel, die die Befestigungsbereiche und die Gurte durchsetzen mit den Gurten verbunden sind. Im eingebauten Zustand der Stäbe überragen die Befestigungsbereiche die Innenränder der Gurte mit einem Überstandsbereich, wobei im Überstandbereich mindestens ein Loch zur Befestigung eines Funktionselementes des Stabbandes vorgesehen ist.

Aufgabe der vorliegenden Erfindung ist es, ein gattungsgemäßes Stabband für Stabbandförderung zur Verfügung zu stellen, welches eine Befestigung von Funktionselementen unter Vermeidung der oben genannten Nachteile gestattet.

Diese Aufgabe wird erfindungsgemäß mit einem Stabband für Stabbandförderer gelöst, welches die Merkmale des Anspruchs 1 aufweist.

Bei der vorliegenden Erfindung werden die ohnehin erforderlichen abgeflachten Befestigungsbereiche der Stäbe dazu genutzt, einen weiteren Befestigungsort für Funktionselemente des Stabbandes zu schaffen. Dazu werden die Befestigungsbereiche über das übliche Maß, welches in etwa der Breite der Gurte entspricht, hinaus verlängert, sodass im eingebauten Zustand der Stäbe die Befestigungsbereiche die Innenseite der Gurte mit einem Überstandsbereich überragen. Zur Befestigung eines Funktionselementes ist in dem Übergangsbereich mindestens ein Loch vorgesehen. Auf diese Weise wird ein robuster Befestigungsort für zusätzliche Funktionselemente des Stabbandes zur Verfügung gestellt, der unabhängig von den Befestigungsstellen der Stäbe ist und mit dem eine zusätzliche Schwächung der Gurte vermieden wird.

Die Erfindung wird nachstehend anhand von Ausführungsbeispielen näher erläutert. In der dazugehörigen Zeichnung zeigt:
- Fig. 1: einen perspektivischen Blick auf die Befestigungsbereiche von Stäben eines Stabbandes an einem Gurt,
- Fig. 2: eine Darstellung gemäß Fig. 1 mit montierten Seitenbegrenzungsfingern,
- Fig. 3: einen perspektivischen Blick auf einen Seitenbegrenzungsfinger, und
- Fig. 4: eine Darstellung gemäß Fig. 1 mit montierten Mitnehmerbügeln (nicht zur Erfindung gehörend).

Ein Stabband für Stabbandförderer landwirtschaftlicher Maschinen besteht aus mindestens zwei parallel zueinander angeordneten umlaufenden Gurten 1. In der Zeichnung ist nur eine Seite des Stabbandes ausschnittsweise dargestellt. Die andere Seite ist spiegelbildlich aufgebaut, sodass die nachfolgenden Ausführungen auch für diese Seite gelten.

Die Gurte 1 sind in diesem Ausführungsbeispiel als Nockenriemen ausgeführt und können z. B. aus Gummi bestehen, der durch Gewebeeinlagen verstärkt ist. Auf der Unterseite des Gurtes 1 sind Nocken 2 vorgesehen, die in einer vorgegebenen Teilung voneinander beabstandet sind. Diese Nocken 2 dienen dem Zwangsantrieb des Stabbandes. Dazu greifen nicht dargestellte Antriebsmittel von Antriebsrädern in Lücken 3 ein, die sich zwischen den Nocken 2 befinden. Derartige Ausführungen sind aus dem Stand der Technik hinlänglich bekannt und müssen daher nicht näher erläutert werden.

Der Abstand zwischen den Gurten 1 des Stabbandes ist durch Stäbe 4 hergestellt, die quer zur Förderrichtung des Stabbandes und parallel zueinander angeordnet und an ihren Enden mit den Gurten 1 verbunden sind. Dazu sind die Stäbe 4 mit abgeflachten Befestigungsbereichen 5 versehen, die z. B. durch Schmieden aus Rundstäben hergestellt sind und auf den Gurten 1 aufliegen. Die Befestigungsbereiche 5 weisen zwei voneinander beabstandete Löcher 6 auf, die mit aus der Zeichnung nicht ersichtlichen Löchern in den Gurten 1 fluchten. Die Befestigung der Stäbe 4 an den Gurten 1 erfolgt z. B. durch nicht dargestellte Niete, die die Löcher 6 der Befestigungsbereiche 5 und die mit diesen fluchtenden Löcher in den Gurten 1 durchsetzen.

Die Gurte 1 sind auf ihrer Oberseite mit einer Profilierung versehen, die aus freistehenden Rippen 7 besteht, zwischen denen eine Ausnehmung 8 gebildet ist. Diese Ausnehmung 8 dient der versenkten Aufnahme der abgeflachten Befestigungsbereiche 5 der Stäbe 4.

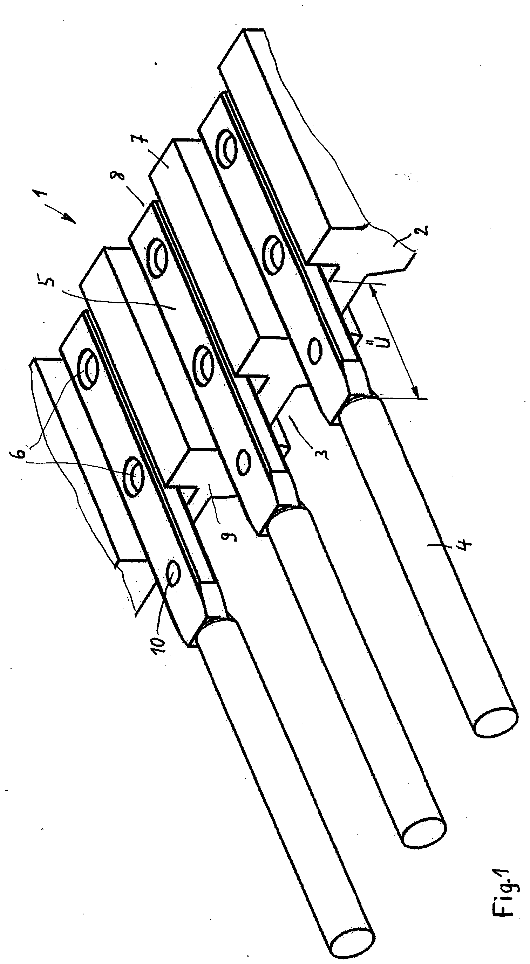

Wie am besten aus Fig. 1 hervorgeht, sind die Befestigungsbereiche 5 der Stäbe 4 über ihr übliches Längenmaß hinaus verlängert, welches in etwa der Breite des Gurtes 1 entspricht. Dadurch ergibt sich beim Montieren der Stäbe 4 ein Überstandsbereich Ü, mit dem der Befestigungsbereich 5 über den Innenrand 9 des Gurtes 1 übersteht. In dem Überstandsbereich Ü ist ein Befestigungsloch 10 für ein weiteres Funktionselement des Stabbandes vorgesehen.

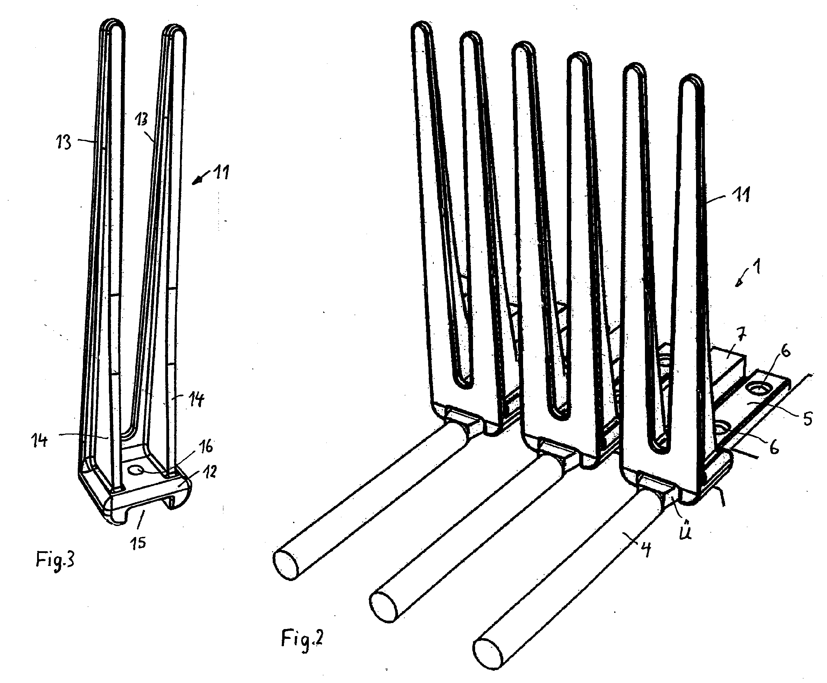

In dem Ausführungsbeispiel gemäß der Fig. 2 und 3 sind Seitenbegrenzungsfinger 11 als zusätzliche Funktionselemente in das Stabband integriert. Die Seitenbegrenzungsfinger 11 sind als Spritzgussteile aus Kunststoff gefertigt. Sie besitzen eine Basis 12, von der zwei Zinken 13 gabelförmig abragen. Die Zinken 13 sind durch Stege 14 ausgesteift. Die Basis 12 besitzt eine Aufnahmenut 15 sowie ein Befestigungsloch 16. Zur Montage werden die Seitenbegrenzungsfinger 11 mit ihren Aufnahmenuten 15 auf die Überstandsbereiche Ü aufgeschoben und die Befestigungslöcher 16 und 10 von Basis 12 bzw. Überstandsbereich Ü in Überdeckung miteinander gebracht. Die Seitenbegrenzungsfinger 11 können dann z. B. durch Vernietung mit den Überstandsbereichen Ü verbunden werden.

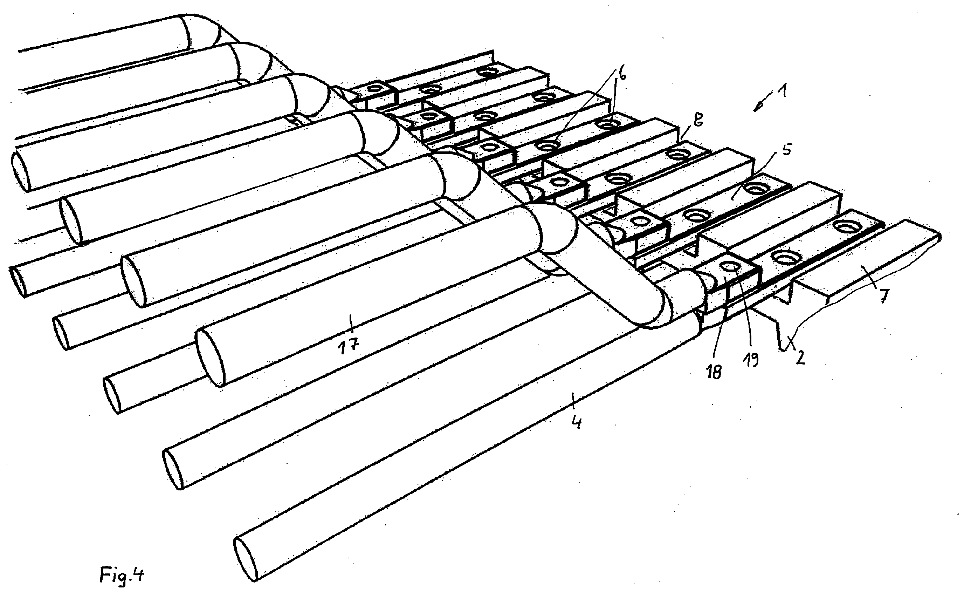

In dem Ausführungsbeispiel gemäß Fig. 4 ist ein Mitnehmerbügel 17 als zusätzliches Funktionselement in das Stabband integriert. Die Mitnehmerbügel 17 weisen an ihren Enden eine Abflachung 18 mit einem Befestigungsloch 19 auf. Zur Befestigung der Mitnehmerbügel 17 werden deren Abflachungen 18 auf den Überstandsbereich Ü aufgelegt und die Befestigungslöcher 19 und 10 in Überdeckung gebracht. Die Befestigung kann dann z. B. durch Vernietung erfolgen.

## Patentansprüche

1. Stabband für Stabbandförderer landwirtschaftlicher Maschinen mit quer zur Laufrichtung und parallel zueinander angeordneten Stäben (4), wobei die Stäbe (4) abgeflachte und gelochte Befestigungsbereiche (5) aufweisen, mit denen sie auf parallel zueinander umlaufenden, zugfesten elastischen und endlosen Gurten (1) aufliegen und durch Niete oder ähnliche Befestigungsmittel, die die Befestigungsbereiche (5) und die Gurte (1) durchsetzen mit den Gurten (1) verbunden sind, wobei die Befestigungsbereiche (5) im eingebauten Zustand der Stäbe (4) die Innenränder (9) der Gurte (1) mit einem Überstandsbereich (Ü) überragen und in dem Überstandsbereich (Ü) mindestens ein Loch (10) zur Befestigung eines Funktionselementes (11, 17) des Stabbandes aufweisen, **dadurch gekennzeichnet, dass** als Spritzgussteile aus Kunststoff gefertigte Seitenbegrenzungsfinger (11) als zusätzliche Funktionselemente in das Stabband integriert sind, die jeweils eine Basis (12) besitzen, von der zwei durch Stege (14) ausgesteifte Zinken (13) gabelförmig abragen, wobei die Basis (12) eine Aufnahmenut (15) sowie ein Befestigungsloch (16) besitzt und die Seitenbegrenzungsfinger (11) mit ihren Aufnahmenuten (15) auf die Überstandsbereiche (Ü), die Befestigungslöcher (16) und (10) von Basis (12) bzw. Überstandsbereich (Ü) in Überdeckung miteinander bringend, aufgeschoben und mit diesen durch Vernietung verbunden sind.

## Claims

1. Rod belt for rod belt conveyors of agricultural machines with rods (4) arranged transverse to the running direction and parallel to each other, wherein the rods (4) having flattened and perforated attachment regions (5) with which they rest on tension-proof elastic and continuous belts (1) running parallel to one another, and are connected to the belts (1) by rivets or similar attachment means which pass through the attachment regions (5) and the belts (1), wherein the attachment regions (5) project beyond the inner edges (9) of the belts (1) with a projection region (Ü) when the rods (4) are installed, and in the projection region (Ü) have at least one hole (10) for attaching a functional element (11, 17) of the rod belt, **characterised in that** lateral boundary fingers (11), constructed as plastic injection moulded parts, are integrated into the rod belt as additional functional elements, respectively having a base (12) from which two prongs (13) stiffened by fins (14) project in a bifurcate manner, wherein the base (12) has a receiving groove (15) and an attachment hole (16) and the lateral boundary fingers (11) are pushed onto the protruding regions (Ü) with their receiving grooves (15), bringing the attachment holes (16) and (10) of the base (12) and protruding region (Ü) together so that they overlap, and the lateral boundary fingers (11) are connected to the protruding regions (Ü) by riveting.

## Revendications

1. Bande à barreaux pour convoyeur à bande à barreaux de machines agricoles comprenant des barreaux (4) disposés transversalement au sens d'avancement et parallèlement les uns par rapport aux autres, les barreaux (4) présentant des régions de fixation (5) aplaties et perforées, par l'intermédiaire desquelles ils reposent sur des courroies (1) résistants à la traction, élastiques et continues circulant de manière parallèles les unes par rapport aux autres, et reliées aux courroies (1) à l'aide de rivets ou de moyens de fixation similaires qui pénètrent dans les régions de fixation (5) et les courroies (1), en état monté des barreaux (4), les régions de fixation (5) dépassant, des bords intérieurs (9) des courroies (1) en formant une région en saillie (Ü) et présentant, dans la région en saillie (Ü) au moins un trou (10) destiné à la fixation d'un élément fonctionnel (11, 17) de la bande à barreaux, **caractérisée en ce que** des doigts de limitation latérale (11), fabriqués comme pièces moulées par injection en matière artificielle, sont intégrés dans la bande à barreaux comme éléments fonctionnels supplémentaires qui possèdent respectivement une base (12), de laquelle deux dents rigidifiées par des entretoises dépassent à la manière d'une fourche, la base (12) possédant une rainure de réception (15) ainsi qu'un trou de fixation (16) et **en ce que** les doigts de limitation latérale (11) sont enfilés avec leurs rainures de réception (15) sur les régions en saillie (Ü), en amenant les trous de fixation (16) et (10) de la base (12) et de la région en saillie (Ü) à se positionner les uns au-dessus des autres, et reliés à ceux-ci par rivetage.
